# EUROPEAN PATENT APPLICATION

(11) **EP 4 560 817 A1**
(43) Date of publication of application: **28.05.2025**
(21) Application number: 24785056.3
(22) Date of filing: 12.03.2024
(51) Int. Cl.: H01M 50/409, H01M 50/429, H01M 50/443, H01M 50/417, H01M 10/052

(54) **SEPARATOR FOR ELECTROCHEMICAL DEVICE AND ELECTROCHEMICAL DEVICE COMPRISING SAME**

(30) Priority: 03.04.2023 KR 20230043721
(71) Applicant: LG Energy Solution, Ltd., Seoul 07335 (KR)
(72) Inventor: LEE, Yong Hyeok, Daejeon Daejeon 34122 (KR); JEONG, So Mi, Daejeon Daejeon 34122 (KR); BAE, Dong Hun, Daejeon Daejeon 34122 (KR); KIM, Kyung Tae, Daejeon Daejeon 34122 (KR)
(74) Representative: Hoffmann Eitle
(86) International application number: PCT/KR2024/003136
(87) International publication number: WO 2024/210347

(57) **Abstract**

The present disclosure relates to a separator for an electrochemical device and an electrochemical device including the same, and particularly, to a separator for an electrochemical device, which can reduce the weight of the separator, can improve the energy density of a battery, and can enhance stiffness because cellulose nanocrystals are included in a porous polymer base, and an electrochemical device including the same.

## Description

### Technical Field

The present invention claims the benefit of Korean Patent Application No. 10-2023-0043721 filed in the Korean Intellectual Property Office on April 3, 2023, the entire contents of which are incorporated herein by reference. The present disclosure relates to a separator for an electrochemical device and an electrochemical device including the same, and particularly, to a separator for an electrochemical device, which can reduce the weight of the separator, can improve the energy density of a battery, and can enhance stiffness by including cellulose nanocrystals in a porous polymer base, and an electrochemical device including the same.

### Background Art

Among components of an electrochemical device, a separator includes a polymer base having a porous structure that is disposed between a positive electrode and a negative electrode, and plays a role to separate the positive electrode and the negative electrode, to prevent an electrical short-circuit between the two electrodes, and to transmit an electrolyte and ions. The separator itself does not participate in an electrochemical reaction, but physical properties of the separator, such as wettability for the electrolyte, a degree of porosity, and a thermal shrinkage ratio, affect performance and safety of the electrochemical device.

Accordingly, in order to enhance the physical properties of the separator, various methods for changing the physical properties of a coating layer by adding the coating layer to the porous polymer base and adding various materials to the coating layer are attempted. For example, in order to improve mechanical strength of the separator, an inorganic compound may be added to the coating layer, or an inorganic compound or hydrate for improving flame resistance and heat resistance of a polymer base may be added to the coating layer.

The separator may be bonded to the electrode through a lamination process. In order to secure bonding strength between the electrode and the separator, a polymer binder may be added to a coating layer composition of the separator.

Meanwhile, in general, metal oxide or metal hydroxide, such as alumina or bohemite, is basically used as the inorganic compound included in the coating layer. However, such an inorganic compound makes it difficult to reduce the weight of the separator because the density of the inorganic compound is high. Moreover, there is a problem in that the inorganic compound within the coating layer has a weak binding characteristic.

Accordingly, in order to improve the energy density of a battery, research of a separator having a reduced weight, enhanced stiffness, and excellent mechanical properties is necessary.

### DISCLOSURE

### Technical Problem

A technical object to be achieved by the present disclosure is to provide a separator for an electrochemical device, which can improve mechanical properties and stiffness while having a low density in order to reduce the weight of the separator, can improve the energy density of a battery by including a porous polymer base including cellulose nanocrystals, and can enhance strength of the separator, and an electrochemical device including the same.

However, objects to be achieved by the present disclosure are not limited to the aforementioned object, and the other objects not described above may be evidently understood from the following description by those skilled in the art.

### Technical Solution

An embodiment of the present disclosure provides a separator for an electrochemical device, including a porous polymer base including cellulose nanocrystals.

According to an embodiment of the present disclosure, the cellulose nanocrystals may be included in a pore of the porous polymer base.

According to an embodiment of the present disclosure, the density of the cellulose nanocrystals may be 0.1 g/m³ or more to 2.0 g/m³ or less.

According to an embodiment of the present disclosure, Young's modulus of the cellulose nanocrystal may be 50 GPa or more to 80 GPa or less.

According to an embodiment of the present disclosure, the diameter of the cellulose nanocrystal may be 30 nm or less.

According to an embodiment of the present disclosure, the length of the cellulose nanocrystal may be 600 nm or less.

According to an embodiment of the present disclosure, the aspect ratio of the cellulose nanocrystal may be 50 or more to 300 or less.

According to an embodiment of the present disclosure, the porous polymer base may be non-woven fabric.

According to an embodiment of the present disclosure, the diameter of the pore of the porous polymer base may be 1 µm or more to 20 µm or less.

According to an embodiment of the present disclosure, the porosity of the porous polymer base may be 30 vol% or more to 80 vol% or less.

An embodiment of the present disclosure provides an electrochemical device including a positive electrode, a negative electrode, and a separator interposed between the positive electrode and the negative electrode.

### Advantageous Effects

The separator for an electrochemical device according to an embodiment of the present disclosure can implement high strength through high Young's modulus of cellulose nanocrystals.

The separator for an electrochemical device according to an embodiment of the present disclosure can improve wettability for an electrolyte of the separator through multiple hydroxyls of cellulose nanocrystals and can improve the ion conductivity of a battery.

The separator for an electrochemical device according to an embodiment of the present disclosure can improve the coating stability of the separator because the separator shows a strong binding property although a content of the binder is reduced in the coating layer due to strong hydrogen bonding between cellulose nanocrystals.

The electrochemical device according to an embodiment of the present disclosure can improve an energy density and ion conductivity.

### Brief Description of Drawings

FIG. 1 is a schematic diagram of a porous polymer base according to an embodiment of the present disclosure.
FIG. 2 is a schematic diagram of a separator for an electrochemical device according to an embodiment of the present disclosure.
FIG. 3 is an enlarged photograph of a surface of Embodiment 1 according to an embodiment of the present disclosure.
FIG. 4 is an enlarged photograph of a cross section of Embodiment 1 according to an embodiment of the present disclosure.

### Best Mode

In this specification, when it is said that a part "includes" a component, it means that another component is not excluded, but another component may be further included, unless explicitly described to the contrary.

In this specification, "A and/or B" means "A and B, or A or B".

In this specification, when it is said that one component is provided "on" the other component, it means that another component may be further disposed without excluding that another component is disposed between the two components, unless explicitly described to the contrary.

In this specification, a characteristic "having a pore" means that a fluid having a gas and/or liquid state can pass from one side of a target to the other side due to a structure in which pores have been mutually connected because the target includes a plurality of pores.

In this specification, a separator has a porous characteristic including multiple pores, and plays a role as a porous ion-conducting barrier which transmits ions while blocking an electrical contact between a negative electrode and a positive electrode in an electrochemical device.

Hereinafter, the present disclosure is described more specifically.

An embodiment of the present disclosure provides a separator 100 for an electrochemical device, which includes a porous polymer base 110 including cellulose nanocrystals (CNC) 113.

The separator for an electrochemical device according to an embodiment of the present disclosure can implement high strength through high Young's modulus of cellulose nanocrystals. Moreover, the separator for an electrochemical device according to an embodiment of the present disclosure can improve wettability for an electrolyte of the separator through multiple hydroxyls of the cellulose nanocrystals and improve the ion conductivity of a battery. Furthermore, the separator for an electrochemical device according to an embodiment of the present disclosure can improve the coating stability of the separator because the separator shows a strong binding property although a content of a binder is reduced in a coating layer due to strong hydrogen bonding between the cellulose nanocrystals.

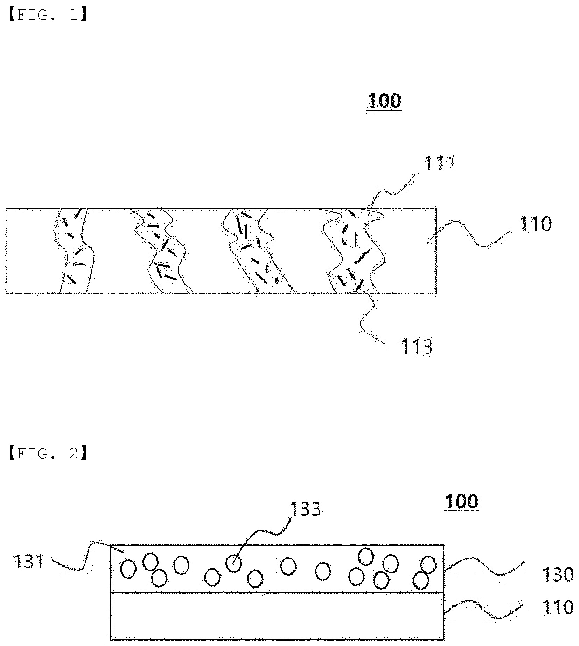

FIG. 1 is a schematic diagram of the porous polymer base 110 according to an embodiment of the present disclosure. The separator 100 for an electrochemical device according to an embodiment of the present disclosure is described in detail with reference to FIG. 1.

An embodiment of the present disclosure relates to a separator for an electrochemical device, which will be applied to a separator itself or one component of the separator. Accordingly, in the separator according to an embodiment of the present disclosure, another layer may be additionally disposed on at least a surface of the separator base on one side thereof in terms of a material or function, if necessary. In an embodiment of the present disclosure, a coating layer including inorganic particles and/or a polymer binder, that is, an organic/inorganic complex coating layer, may be formed on one side or both sides of the porous base of the separator.

According to an embodiment of the present disclosure, the separator 100 for an electrochemical device includes the porous polymer base 110. As described above, as the separator 100 for an electrochemical device includes the porous polymer base 110, the separator can transmit lithium ions while blocking an electrical contact, and can implement a shutdown function at a proper temperature.

According to an embodiment of the present disclosure, the porous polymer base 110 includes the cellulose nanocrystals (CNC) 113. As described above, as the porous polymer base 110 includes the cellulose nanocrystals (CNC) 113, the stiffness of the separator can be secured, and the ion conductivity of the separator can be improved by improving the wettability of the separator.

According to an embodiment of the present disclosure, the cellulose nanocrystals may include a crystal structure. As described above, as the cellulose nanocrystals include the crystal structure, the stiffness of the separator can be secured. In this specification, the crystal structure may be checked by using an X-ray diffraction method. More specifically, some of X-rays are diffracted by striking the X-rays against the nanocrystals. Whether the cellulose nanocrystals have the crystal structure may be determined by analyzing a diffraction angle and strength of the diffracted X-rays and measuring a unique value in a material structure.

According to an embodiment of the present disclosure, the cellulose nanocrystals may be derived from cellulose including a crystal area and a non-crystal area. The crystal area may mean an area including only the crystal structure.

According to an embodiment of the present disclosure, the cellulose may be constructed by the repetition of the crystal area and the non-crystal area.

According to an embodiment of the present disclosure, the cellulose nanocrystals may be formed by removing the non-crystal area by treating the cellulose including the crystal area and the non-crystal area by acid. Specifically, the cellulose nanocrystals may be the crystal area of the cellulose. As described above, the cellulose nanocrystals can secure the stiffness of the separator by selecting the cellulose nanocrystals being the crystal area of the cellulose.

According to an embodiment of the present disclosure, the acid may be hydrochloric acid, sulfuric acid, phosphoric acid, hydrobromic acid, or nitric acid, etc.

According to an embodiment of the present disclosure, the concentration of the acid may be 50 wt% or more to 70 wt%.

According to an embodiment of the present disclosure, the acid treatment may be performed at 40°C or more to 50°C or less.

In this specification, the cellulose nanocrystals may mean cellulose crystallites, cellulose nanowhisker, or nanocrystalline cellulose.

According to an embodiment of the present disclosure, the cellulose nanocrystals 113 may be included in a pore 111 of the porous polymer base 110. Specifically, the cellulose nanocrystals 113 are not included in the porous polymer base 110 itself, but the cellulose nanocrystals 113 may be disposed or dispersed within the pore 111 that is formed within the porous polymer base 110. As described above, as the cellulose nanocrystals 113 are included in the pore 111 of the porous polymer base 110, the stiffness of the separator can be secured, and the energy density of a battery can be improved because the weight of the separator is reduced. Moreover, ion conductivity can be improved by improving the wettability of the separator.

According to an embodiment of the present disclosure, the density of the cellulose nanocrystals 113 may be 0.1 g/m³ or more to 2.0 g/m³ or less. Specifically, the density of the cellulose nanocrystals 113 may be 0.2 g/m³ or more to 1.9 g/m³ or less, 0.3 g/m³ or more to 1.8 g/m³ or less, 0.4 g/m³ or more to 1.7 g/m³ or less, 0.5 g/m³ or more to 1.6 g/m³ or less, 0.6 g/m³ or more to 1.5 g/m³ or less, 0.7 g/m³ or more to 1.4 g/m³ or less, 0.8 g/m³ or more to 1.3 g/m³ or less, 0.9 g/m³ or more to 1.2 g/m³ or less, or 1.0 g/m³ or more to 1.1 g/m³ or less. In the aforementioned range, by adjusting the density of the cellulose nanocrystals 113, the weight of the separator can be reduced, and the energy density of a battery can be improved.

According to an embodiment of the present disclosure, Young's modulus of the cellulose nanocrystals 113 may be 50 GPa or more to 80 GPa or less. Specifically, Young's modulus of the cellulose nanocrystals 113 may be 51 GPa or more to 79 GPa or less, 52 GPa or more to 78 GPa or less, 53 GPa or more to 77 GPa or less, 54 GPa or more to 76 GPa or less, 55 GPa or more to 75 GPa or less, 56 GPa or more to 74 GPa or less, 57 GPa or more to 73 GPa or less, 58 GPa or more to 72 GPa or less, 59 GPa or more to 71 GPa or less, 60 GPa or more to 70 GPa or less, 61 GPa or more to 69 GPa or less, 62 GPa or more to 68 GPa or less, 63 GPa or more to 67 GPa or less, or 64 GPa or more to 66 GPa or less. In the aforementioned range, by adjusting Young's modulus of the cellulose nanocrystals 113, the stability of the separator can be improved, and the stiffness of the separator can be secured.

According to an embodiment of the present disclosure, the diameter of the cellulose nanocrystal 113 may be 30 nm or less. Specifically, the diameter of the cellulose nanocrystal 113 may be more than 0 nm to 30 nm or less, 1 nm or more to 29 nm or less, 2 nm or more to 28 nm or less, 3 nm or more to 27 nm or less, 4 nm or more to 26 nm or less, 5 nm or more to 25 nm or less, 6 nm or more to 24 nm or less, 7 nm or more to 23 nm or less, 8 nm or more to 22 nm or less, 9 nm or more to 21 nm or less, 10 nm or more to 20 nm or less, 11 nm or more to 19 nm or less, 12 nm or more to 18 nm or less, 13 nm or more to 17 nm or less, or 14 nm or more to 16 nm or less. In the aforementioned range, by adjusting the diameter of the cellulose nanocrystal 113, the cellulose nanocrystals can be easily disposed in the pore of the porous polymer base, and the dispersibility of the cellulose nanocrystals within the pore of the porous polymer base can be improved.

According to an embodiment of the present disclosure, the length of the cellulose nanocrystals 113 may be 600 nm or less. Specifically, the length of the cellulose nanocrystals 113 may be 100 nm or more to 600 nm or less, 150 nm or more to 550 nm or less, 200 nm or more to 500 nm or less, 250 nm or more to 450 nm or less, or 300 nm or more to 400 nm or less. In the aforementioned range, by adjusting the length of the cellulose nanocrystals 113, the cellulose nanocrystals can be easily disposed in the pore of the porous polymer base, and the dispersibility of the cellulose nanocrystals within the pore of the porous polymer base can be improved.

According to an embodiment of the present disclosure, the aspect ratio of the cellulose nanocrystal 113 may be 50 or more to 300 or less. That is, the cellulose nanocrystal may have a high aspect ratio like a fiber form. Specifically, the aspect ratio of the cellulose nanocrystal 113 may be 60 or more to 290 or less, 70 or more to 280 or less, 80 or more to 260 or less, 90 or more to 250 or less, 100 or more to 240 or less, 110 or more to 230 or less, 120 or more to 220 or less, 130 or more to 210 or less, 140 or more to 200 or less, 150 or more to 190 or less, or 160 or more to 180 or less. In the aforementioned range, by adjusting the aspect ratio of the cellulose nanocrystal 113, the cellulose nanocrystals can be easily disposed in the pore of the porous polymer base, and the dispersibility of the cellulose nanocrystals within the pore of the porous polymer base can be improved.

In this specification, the aspect ratio may mean a ratio (L/D) of the length L of the cellulose nanocrystal to a diameter D of a cross section (a cross section in a direction perpendicular to the direction of the length) in a filler having a fiber form. The length and the diameter may be measured by enlarging and photographing a material to be measured.

According to an embodiment of the present disclosure, the diameter of the pore 111 of the porous polymer base 110 may be 1 µm or more to 20 µm or less. Specifically, the diameter of the pore 111 of the porous polymer base 110 may be 2 µm or more to 19 µm or less, 3 µm or more to 18 µm or less, 4 µm or more to 17 µm or less, 5 µm or more to 16 µm or less, 6 µm or more to 15 µm or less, 7 µm or more to 14 µm or less, 8 µm or more to 13 µm or less, or 9 µm or more to 12 µm or less. The size of the pore may be an average size. In the aforementioned range, by adjusting the diameter of the pore of the porous polymer base, a content of the cellulose nanocrystals in the pore within the porous polymer base can be increased, and the stiffness of the separator can be enhanced. In the aforementioned range, by adjusting the size of the pore, a degree that lithium ions move through the separator can be adjusted, and performance of the battery can be improved. In this specification, the size of the pore may be calculated from a distribution of pore sizes measured by using a capillary flow porometer method. For example, first, after the separator to be measured is wetted by a wetting agent such as a galwick solution, air pressure on one side of the base is slowly increased. At this time, when applied air pressure becomes greater than capillary attraction of the wetting agent that is present within the pore, the wetting agent that closes the pore is pushed out. The size of the pore and a distribution of the pores are measured through pressure and a flowrate at the moment when the wetting agent is pushed out. An average size of the pores and a maximum size of the pores can be checked based on the size and distribution.

According to an embodiment of the present disclosure, the porosity of the porous polymer base 110 may be 30 vol% or more to 80 vol% or less. Specifically, the porosity of the porous polymer base 110 may be 30 vol% or more to 80 vol% or less, 32 vol% or more to 78 vol% or less, 34 vol% or more to 76 vol% or less, 36 vol% or more to 74 vol% or less, 38 vol% or more to 72 vol% or less, 40 vol% or more to 70 vol% or less, 42 vol% or more to 68 vol% or less, 44 vol% or more to 66 vol% or less, 46 vol% or more to 64 vol% or less, or 48 vol% or more to 62 vol% or less. In the aforementioned range, by adjusting the porosity of the porous polymer base 110, the content of the cellulose nanocrystals in the pore within the porous polymer base can be increased, and the stiffness of the separator can be enhanced.

In this specification, the porosity means the ratio of a volume occupied by the pores with respect to a total volume. vol% is used as a unit of the porosity. The porosity may be interchangeably used with a term, such as an air void ratio or a porosity.

In this specification, the porosity corresponds to a value that is obtained by subtracting a volume converted from the weight and density of each constituent component of the porous polymer base 110 from the volume of the porous polymer base 110, which is obtained by calculating the thickness, width, and height of the porous polymer base 110.

According to an embodiment of the present disclosure, the porous polymer base 110 may be non-woven fabric. Specifically, the non-woven fabric may mean non-woven fabric having high porosity. As described above, by selecting non-woven fabric as the porous polymer base 110, a content of the cellulose nanocrystals 113 in the pore 111 within the porous polymer base 100 can be increased, and the stiffness of the separator can be enhanced.

According to an embodiment of the present disclosure, the porous polymer base 110 may be manufactured by using polyolefin-based resin as base resin. Polyethylene, polypropylene, polypentene, etc. may be taken as examples of the polyolefin-based resin. The polyolefin-based resin may include one or more of polyethylene, polypropylene, and polypentene. The separator having the pore manufactured by using such polyolefin-based resin as base resin, that is, the multiple pores, may assign a shutdown function at a proper temperature.

According to an embodiment of the present disclosure, the porous polymer base 110 may be manufactured by using polyethylene terephthalate (PET) resin as base resin. The separator having the pore manufactured by using such polyethylene terephthalate (PET) resin as base resin, the multiple pores, may assign a shutdown function at a proper temperature.

According to an embodiment of the present disclosure, the weight-average molecular weight of the polyolefin-based resin or the polyethylene terephthalate -based resin may be 30,000 or more to 1.5 million or less. In the aforementioned range, by adjusting the weight-average molecular weight of the polyolefin-based resin, compression resistance of the separator can be improved. Moreover, if heterogeneous polyolefin-based resin or polyethylene terephthalate -based resin is mixed and used or the separator is formed to have a multi-layer structure including heterogeneous polyolefin-based resin or polyethylene terephthalate -based resin, the weight-average molecular weight of the polyolefin-based resin or the polyethylene terephthalate -based resin may be calculated by adding a weight-average molecular weight according to the content ratio of each polyolefin-based resin or polyethylene terephthalate -based resin.

In the present disclosure, the weight-average molecular weight (Mw) may be measured by gel permeation chromatography (GPC: PL GPC220, Agilent Technologies), and measuring conditions may be set as follows.
- Column: PL Olexis (Polymer Laboratories)
- Solvent: TCB (Trichlorobenzene)
- Flow velocity: 1.0 ml/min
- Sample concentration: 1.0 mg/ml
- Amount of injection: 200 µℓ
- Column temperature: 160°C
- Detector: Agilent High Temperature RI detector
- Standard: Polystyrene (corrected with a cubic function)

In addition to the polyolefin-based resin or the polyethylene terephthalate -based resin, another resin component may be further mixed if necessary. In addition to the resin component, for example, the separator may include a filler particle. The filler particle may be introduced for the purpose of a pressure barrier in order to prevent the thickness, pore size, and porosity of the separator base from being excessively reduced with respect to high pressure that is applied in a lamination process that is described later. The filler particle may include an organic filler or an inorganic filler having a predetermined grain diameter, and is not limited to a specific component if a filler particle has strength equal to or greater than that of the polyolefin-based resin or the polyethylene terephthalate -based resin.

According to an embodiment of the present disclosure, the porous polymer base 110 may be manufactured by a method (wet method) of generating a single phase by mulling the polyolefin-based resin or the polyethylene terephthalate - based resin with diluents at a high temperature, separating the phases of a polymer material and the diluents in a cooling process, forming the pores by extracting the diluents, and then performing stretching and heat-fixing treatment.

According to an embodiment of the present disclosure, those skilled in the art may easily manufacture the separator 100 or the porous polymer base 110 so that an average size and maximum size of the pores comply with the range of the present disclosure by adjusting the mixing ratio, draw magnification, heat-fixing treatment temperature, etc. of the diluents.

According to an embodiment of the present disclosure, the size of the pore of the separator 100 may be 1 µm or more to 100 µm or less. The size of the pore may be an average size. In the aforementioned range, by adjusting the size of the pore, a degree that lithium ions move through the separator can be adjusted, and performance of a battery can be improved.

The size of the pore may be calculated from a distribution of pore sizes that are measured by using the capillary flow porometer method. For example, first, after the separator to be measured is dipped into a wetting agent, such as a galwick solution, air pressure on one side of the base is gradually increased. At this time, when the applied air pressure becomes greater than capillary attraction of the wetting agent present within the pore, the wetting agent that closes the pore is pushed out. The sizes and distribution of the pores are measured based on pressure and a flowrate at the moment when the wetting agent is pushed out. An average size and maximum size of the pores may be checked based on the sizes and the distribution.

According to an embodiment of the present disclosure, the porous polymer base 110 may have a thickness of 5 µm to 30 µm.

FIG. 2 is a schematic diagram of a separator for an electrochemical device according to an embodiment of the present disclosure. The separator, that is, an embodiment of the present disclosure, is described in detail with reference to FIG. 2.

According to an embodiment of the present disclosure, the separator 100 for an electrochemical device may further include a coating layer 130 formed on a surface of the porous polymer base 110 at least on one side thereof.

According to an embodiment of the present disclosure, the coating layer 130 includes a polymer binder 131 and inorganic particles 133, and has a porous characteristic.

According to an embodiment of the present disclosure, the polymer binder 131 and inorganic particles 133 of the coating layer 130 may be included at the ratio of 1:99 to 30:70 as a weight ratio. The ratio may be properly adjusted in the aforementioned range. With respect to the sum 100 wt% of the polymer binder 131 and the inorganic particles 133, the content of the polymer binder may be 1 wt% or more, or 5 wt% or more, or 10 wt% or more, and the inorganic particles may be 80 wt% or more, 85 wt% or more, 90 wt% or more, or 95 wt% or more.

According to an embodiment of the present disclosure, the coating layer 130 may be formed by the inorganic particles 133 being bound by the polymer binder 131 and integrated within a side thereof. A pore within the coating layer 130 may be caused from an interstitial volume, that is, an empty space between the inorganic particles.

In an embodiment of the present disclosure, the porosity of the coating layer 130 may be 30 vol% to 70 vol%. When the porosity is 70 vol% or less, a dynamic characteristic in which the coating layer can withstand a press process of bonding to an electrode can be secured. Furthermore, it is suitable for securing bonding strength because a surface aperture ratio does not become too high. Meanwhile, when the porosity is 30 vol% or more, it is advantageous in terms of ion penetrability.

In this specification, the porosity means the ratio of a volume occupied by the pore with respect to a total volume. vol% is used as a unit of the porosity. The porosity may be interchangeably used with a term, such as an air void ratio or a porosity.

In this specification, the porosity corresponds to a value that is obtained by subtracting a volume converted from the weight and density of each constituent component of the coating layer 130 from the volume of the coating layer 130, which is obtained by calculating the thickness, width, and height of the coating layer 130.

In an embodiment of the present disclosure, the porosity and pore size of the coating layer 130 may be measured by a BET 6-point method by a nitrogen gas adsorption and distribution method by using a scanning electronic microscopy (SEM) image, a mercury porosimeter, a capillary flow porometer, or a porosimetry analyzer (Bell Japan Inc, Belsorp-II mini). In this case, it may be advantageous to use the capillary flow porometer.

According to an embodiment of the present disclosure, the thickness of the coating layer 130 may be formed as a thickness of 1 µm to 20 µm with respect to any one side of the porous polymer base 110, but the present disclosure is not specially limited thereto. Those skilled in the art may adjust the thickness to a proper range in terms of heat resistance or electrical resistance.

According to an embodiment of the present disclosure, the thickness of the porous polymer base 110 and/or the coating layer 130 may be measured by applying a contact type measuring instrument. VL-50S-B of Mitutoyo Co., for example, may be used as the contact type measuring instrument.

According to an embodiment of the present disclosure, the polymer binder 131 which may be used in the coating layer 130 may be any one polymer resin selected from a group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cyanoethylpullulan, cyanoethylpolyvinylalcohol, cyanoethylcellulose, cyanoethylsucrose, pullulan, and carboxyl methyl cellulose or a mixture of two or more of them. However, the present disclosure is not specially limited thereto.

In an embodiment of the present disclosure, the inorganic particle 133 which may be used in the coating layer 130 is not specially limited if an inorganic particle is stable electrically and chemically. That is, the inorganic particle 133 which may be used in an embodiment of the present disclosure is not specially limited if an inorganic particle does not generate an oxidation and/or reduction reaction in an operating voltage range (e.g., 0 V to 5 V on the basis of Li/Li⁺) of an electrochemical device that is applied.

According to an embodiment of the present disclosure, unconstrained examples of the inorganic particles 133 may include BaTiO₃, Pb(Zr,Ti)O₃ (PZT), Pb₁₋ₓLaₓZr_{1-y}Ti_{y}O₃(PLZT, 0<x<1, 0<y<1), Pb (Mg_{1/3}Nb_{2/3})O₃-PbTiO₃(PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn (OH) ₆), tin-zinc oxide (Zn₂SnO₄, ZnSnO₃), antimony trioxide (Sb₂O₃), antimony tetroxide (Sb₂O₄), antimony penta-oxide (Sb₂O₅), etc., and the inorganic particles 133 may include one or two or more of them.

According to an embodiment of the present disclosure, an average diameter D₅₀ of the inorganic particles 133 is not specially limited. However, it is preferred that the average diameter of the inorganic particles has a range of 0.3 *µ*m or more to 1 *µ*m or less in order to form the coating layer 130 having a uniform thickness and for proper porosity. Specifically, when the average diameter is less than 0.3 *µ*m, the dispersibility of the inorganic particles may be degraded in slurry that is prepared for the manufacturing of the coating layer. When the average diameter is greater than 1 *µ*m, the thickness of the coating layer that is formed may be increased.

In this specification, a "D50 grain diameter" means a grain diameter at a point 50% of a particle number accumulation distribution according to the grain diameter. The grain diameter may be measured by using a laser diffraction method. Specifically, a distribution of the sizes of particles is calculated by dispersing powder to be measured in a dispersion medium, then introducing the power into a commercial laser diffraction particle size measuring device (e.g., Microtrac S3500), and measuring a difference between diffraction patterns according to the sizes of the particles when the particles pass through a laser beam. The D50 grain diameter may be measured by calculating a particle diameter at a point at which a particle number accumulation distribution according to the grain diameter in the measuring device becomes 50%.

According to an embodiment of the present disclosure, a method of forming the coating layer 130 is as follows, for example. First, a polymer solution is manufactured by dissolving the polymer binder 131 in a proper organic solvent. It is preferred that the solvent has a solubility index similar to that of the polymer binder to be used and a low boiling point. This is for easily removing the solvent after the polymer solution is uniformly mixed. Unconstrained examples of the solvent which may be used include acetone, tetrahydrofuran, methylene chloride, chloroform, dimethylformamide, N-methyl-2-pyrrolidone (NMP), cyclohexane, water, or a mixture of them, etc.

Next, the inorganic particles 133 are added to and dispersed in the manufactured polymer solution. According to an embodiment of the present disclosure, the content ratio of the inorganic particles 133 and the polymer binder 131 is the same as that described above, and may be properly adjusted by considering the thickness of the coating layer of the present disclosure, which is finally manufactured and the size and porosityof the pore.

Next, the manufactured inorganic particle slurry is applied to at least one side of a prepared separator base and dried. A method of applying the slurry to a surface of the porous polymer base is not specially limited to any one method, and a common method that is known in the industry may be used as the method. For example, various methods, such as dip coating, die coating, roll coating, comma coating, or a mixed method of them may be used as the method.

In the dry process, a temperature and time conditions are properly set so that the occurrence of a surface defect in the coating layer 130 is minimized. For the drying, a dry-assistant device, such as a dry oven or hot air, may be used within a proper range.

If the separator 100 includes the coating layer 130, damage attributable to the pressing of the inorganic particles 133 on a surface of the porous polymer base 110 that faces the coating layer 130 upon lamination process can be reduced.

According to an embodiment of the present disclosure, the separator 100 is interposed between a negative electrode and a positive electrode, and is manufactured as electrochemical device by a lamination process of binding the separator by applying heat and/or pressure. In an embodiment of the present disclosure, the lamination process may be performed by a roll press device including a pair of pressurization rollers. That is, interlayer binding may be achieved by sequentially stacking the negative electrode, the separator, and the positive electrode and inputting the negative electrode, the separator, and the positive electrode between the pressurization rollers. In this case, the lamination process may be performed by a hot pressurization method.

An embodiment of the present disclosure provides an electrochemical device including a positive electrode; a negative electrode; and the separator 100 interposed between the positive electrode and the negative electrode.

The electrochemical device according to an embodiment of the present disclosure can improve energy density and ion conductivity.

In the present disclosure, the electrochemical device is a device that converts chemical energy into electrical energy by an electrochemical reaction, and is a concept including a primary battery and a secondary battery. In this specification, the secondary battery is capable of being charged and discharged, and means a lithium secondary battery, a nickel cadmium battery, a nickel-hydrogen battery, etc. The lithium secondary battery uses lithium ions as an ion conductor. A nonaqueous electrolyte secondary battery including a liquid electrolyte, an all-solid state battery including a solid electrolyte, a lithium polymer battery including a gel polymer electrolyte, a lithium metal battery using lithium metal as a negative electrode, etc. may be taken as examples of the lithium secondary battery, but the present disclosure is not limited thereto.

According to an embodiment of the present disclosure, the positive electrode includes a positive electrode current collector, and a positive electrode active material layer including a positive electrode active material, a conductive material, and binder resin on a surface of the current collector at least on one side thereof. The positive electrode active material may include one or a mixture of two or more, among a layered compound, such as lithium manganese composite oxide (LiMn₂O₄, LiMnO₂, etc.), lithium cobalt oxide (LiCoO₂), or lithium nickel oxide (LiNiO₂), or a compound substituted with one or more of transition metal; lithium manganese oxide, such as Chemical Formula Li₁₊ₓMn₂₋ₓO₄ (wherein x is 0 to 0.33), LiMnO₃, LiMn₂O₃, LiMnO₂, etc.; vanadium oxide, such as lithium copper oxide (Li₂CuO₂); LiV₃O₈, LiV₃O₄, V₂O₅, Cu₂V₂O₇, etc.; Ni site-type lithium nickel oxide that is represented as Chemical Formula LiN₁₋ₓMₓO₂ (wherein M = Co, Mn, Al, Cu, Fe, Mg, B, or Ga, and x = 0.01 to 0.3); lithium manganese composite oxide that is represented as Chemical Formula LiMn₁₋ₓMₓO₂ (wherein M = Co, Ni, Fe, Cr, Zn, or Ta, and x = 0.01 to 0.1) or Li₂Mn₃MO₈ (wherein M = Fe, Co, Ni, Cu, or Zn); LiMn₂O₄ in which some of Li in Chemical Formula has been substituted with alkaline earth metal ions; a disulfide compound; and Fe₂(MoO₄)₃.

According to an embodiment of the present disclosure, the negative electrode includes a negative electrode current collector and a negative electrode active material layer including a negative electrode active material, a conductive material, and binder resin on a surface of the current collector at least on one side thereof. The negative electrode may include one type or a mixture of two or more, selected among lithium metal oxide; carbon, such as non-graphite carbon, or graphite-based carbon; metal composite oxide, such as LiₓFe₂O₃(0≤x≤1), LiₓWO₂(0≤x≤1), SnₓMe₁₋ₓMe'_{y}O₂ (Me: Mn, Fe, Pb, Ge; Me': Al, B, P, Si, Group 1, Group 2, and Group 3 elements of the periodic table, halogen; 0<x≤1; 1≤y≤3; 1≤z≤8); lithium metal; a lithium alloy; a silicon-based alloy; a tin-based alloy; metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; an Li-Co-Ni-based material; and titanium oxide, as the negative electrode active material.

According to an embodiment of the present disclosure, the conductive material may be any one selected from a group consisting of graphite, carbon black, carbon fiber, metal fiber, metal powder, conductive whisker, conductive metal oxide, activated carbon, and a polyphenylene derivative, for example, or a mixture of two or more conductive materials of them. More specifically, the conductive material may be one type selected from a group consisting of natural graphite, synthetic graphite, super-p, acetylene black, ketjen black, channel black, furnace black, lamp black, summer black, denka black, aluminum powder, nickel powder, zine oxide, potassium titanate, and titanium oxide or a mixture of two or more conductive materials of them.

According to an embodiment of the present disclosure, the current collector is not specially limited if a current collector has high conductivity without causing a chemical change in a corresponding battery. For example, a current collector in which stainless steel, copper, aluminum, nickel, titanium, calcined carbon, aluminum, or stainless steel has been surface-treated with carbon, nickel, titanium, silver, etc. may be used.

According to an embodiment of the present disclosure, a polymer that is commonly used in an electrode in the industry may be used as the binder resin. Unconstrained examples of such binder resin may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, and carboxyl methyl cellulose, but the present disclosure is not limited thereto.

In the present disclosure, positive electrode slurry for manufacturing the positive electrode active material layer may include a dispersant. The dispersant may be a pyrrolidone-based compound. Specifically, the dispersant may be N-methylpyrrolidone (ADC-01, LG Chemical Corporation).

According to an embodiment of the present disclosure, a content of the dispersant included in the positive electrode slurry may be more than 0 parts by weight to 0.5 parts by weight or less with respect to 100 parts by weight of the positive electrode slurry. Specifically, the content of the dispersant included in the positive electrode slurry may be more than 0.05 parts by weight to 0.4 parts by weight or less with respect to 100 parts by weight of the positive electrode slurry.

According to an embodiment of the present disclosure, negative electrode slurry for manufacturing the negative electrode active material layer may include a dispersant. The dispersant may be a polypyrrolidone-based compound. Specifically, the dispersant may be polyvinylpyrrolidone (Junsei Chemical Co., Ltd. of Japan).

According to an embodiment of the present disclosure, the content of the dispersant included in the negative electrode slurry may be more than 0 parts by weight to 0.5 parts by weight or less with respect to the negative electrode slurry 100 parts by weight. Specifically, the content of the dispersant included in the negative electrode slurry may be more than 0.05 parts by weight to 0.4 parts by weight or less with respect to the negative electrode slurry 100 parts by weight.

According to an embodiment of the present disclosure, a battery may be manufactured by inserting the electrochemical device that has been prepared as described into a proper case and injecting an electrolyte.

According to an embodiment of the present disclosure, the electrolyte is a salt having a structure such as that of A⁺B⁻, which is obtained by dissolving or dissociating a salt in which A⁺ includes ions composed of alkali metallic cations, such as Li⁺, Na⁺, or K⁺, or a combination of them and B⁻ includes ions composed of anions, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C (CF₂SO₂)₃⁻, or a combination of them, in an organic solvent selected from a group consisting of propylene carbonate (PC), ethylene carbonate (EC), diethyl carbonate (DEC), dimethyl carbonate (DMC), dipropylcarbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), or gamma butyrolactone (γ-butyrolactone) or a mixture of them, but the present disclosure is not limited thereto only.

An embodiment of the present disclosure provides a battery module that includes a battery including the electrochemical device as a unit battery, a battery pack including the battery module, and a device including the battery pack as a power source. Detailed examples of the device may include a power tool that is moved by power from a battery motor; an electric vehicle including an electric vehicle (EV), a hybrid electric vehicle (HEV), a plug-in hybrid electric vehicle (PHEV), etc.; an electric two-wheel vehicle including an electric bicycle (E-bike) and an electric scooter (E-scooter); an electric golf cart; a system for power storage, etc., but the present disclosure is not limited thereto.

### [Mode for Invention]

Hereinafter, embodiments are described in detail in order to describe the present disclosure in detail. However, the embodiments according to the present disclosure may be modified in various other forms, and the scope of the present disclosure is not construed as being limited to embodiments described hereinafter. The embodiments of this specification are provided to a person having ordinary knowledge in the art to more fully describe the present disclosure.

### <Embodiment 1>

Non-woven fabric (a total thickness 14 µm, the size of a pore: 10 µm or more, and porosity 40 vol%) of a polyethylene terephthalate (PET, the weight-average molecular weight 50,000) material was manufactured as the porous polymer base.

Thereafter, the dispersion solution was manufactured by adding the cellulose nanocrystals (diameter: 10 nm, length: 200 nm, density: 1.5 g/cm³, and Young's modulus: 70 GPa, MAINE Co., Ltd.) to water and then dispersing the cellulose nanocrystals.

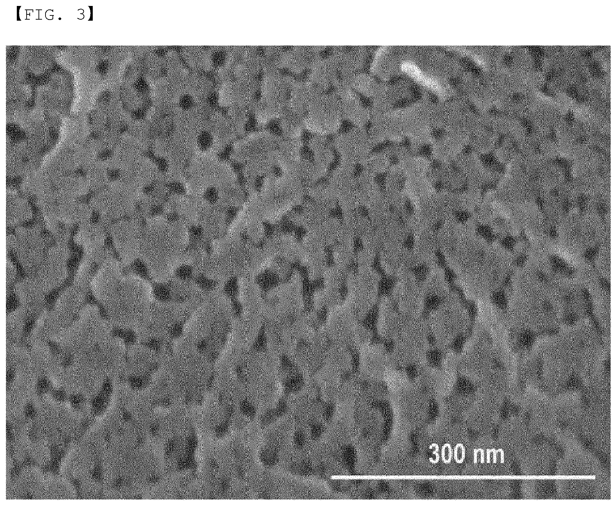

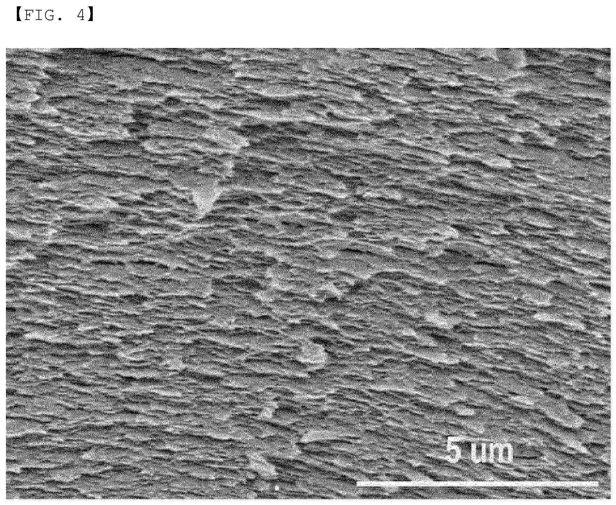

After the porous polymer base was impregnated into the dispersion solution, the separator having a thickness of 15 µm was manufactured by drying the porous polymer base by the wind of 50°C by using a heat gun so that the amount of loading of the cellulose nanocrystals onto the porous polymer base becomes 9.7 g/m². FIG. 3 is an enlarged photograph of a surface of Embodiment 1 according to an embodiment of the present disclosure. FIG. 4 is an enlarged photograph of a cross section of Embodiment 1 according to an embodiment of the present disclosure. Referring to FIGS. 3 and 4, it was checked that the cellulose nanocrystals were disposed in the pores and the cellulose nanocrystals were stacked in the surface direction of a surface of the porous polymer base to form a dense packing structure.

### <Comparative Example 1>

A separator was manufactured identically with Embodiment 1 except that Al₂O₃ (density: 3.95 g/cm³ and Young's modulus: 215 GPa, Sumitomo Corporation) was used instead of the cellulose nanocrystals in Embodiment 1 and the separator having a thickness of 15 µm was manufactured so that the amount of loading of the Al₂O₃ onto the porous polymer base was 25.2 g/m².

### <Comparative Example 2>

A separator was manufactured identically with Embodiment 1 except that Al(OH)₃ (density: 2.42 g/cm³ and Young's modulus: 120 GPa, Sumitomo Corporation) was used instead of the cellulose nanocrystals in Embodiment 1 and the separator having a thickness of 15 µm was manufactured so that the amount of loading of the Al(OH)₃ onto the porous polymer base was 15.6 g/m²

### <Comparative Example 3>

A separator was manufactured identically with Embodiment 1 except by using SiO₂ (density: 2.65 g/cm³ and Young's modulus: 66.3 GPa, MAINE Co., Ltd.) instead of the cellulose nanocrystals in Embodiment 1 and the separator having a thickness of 15 µm was manufactured so that the amount of loading of the SiO₂ onto the porous polymer base becomes 17.1 g/m².

### <Comparative Example 4>

Polyethylene resin (weight-average molecular weight 900,000) in Embodiment 1 was extruded. A porous polymer base (total thickness 9µm, the size of a pore: 100 nm or less, and porosity: 40 vol%) was manufactured by a wet method.

Slurry for a coating layer was prepared by inputting styrene-butyl acrylate, that is, an acyrlic binder having a grain diameter of 500 nm, a copolymer of PVdF and HFP having a grain diameter of 500 nm and having a degree of substitution (a weight ratio including HFP in a PVdF-based polymer) of 20 wt%, and cellulose nanocrystals (diameter: 10 nm, length: 200 nm, density: 1.5 g/cm³, and Young's modulus: 70 GPa, MAINE Co., Ltd.) into water and dispersing them. The weight ratio of the polymer binder particles and the inorganic particles was 25:75.

A separator having a thickness of 10 µm was manufactured by applying the slurry for the coating layer on both surfaces of the porous polymer base by a bar coating method by using a doctor blade and drying the slurry by the wind of 50°C by using a heat gun so that the amount of loading of the cellulose nanocrystals onto the porous polymer base becomes 8.5 g/m².

### <Manufacturing of electrochemical device>

### 1) Manufacturing of positive electrode

Slurry for a positive electrode active material layer having a 50 wt% concentration of the remaining components except water was prepared by mixing a positive electrode active material (LiNi_{0.8}Mn_{0.1}Co_{0.1}O₂), a conductive material (carbon black), a dispersant (N-methylpyrrolidone, ADC-01, LG Chemical Corporation), and binder resin (PVDF-HFP and PVDF were mixed) with water at a weight ratio of 97.5:0.7:0.14:1.66. Next, a positive electrode having the positive electrode active material layer (thickness 120µm) was manufactured by applying the slurry on a surface of an aluminum thin film (thickness 10 µm) and drying the slurry.

### 2) Manufacturing of negative electrode

Slurry for a negative electrode active material layer having a 50 wt% concentration of the remaining components except water was prepared by mixing graphite (natural graphite and synthetic graphite mixed), a conductive material (carbon black), a dispersant (polyvinylpyrrolidone, Junsei Chemical Co., Ltd. of Japan), and a binder resin (PVDF-HFP and PVDF were mixed) with water at a weight ratio of 97.5:0.7:0.14:1.66. Next, a negative electrode having the negative electrode active material layer (thickness 120 µm) was manufactured by applying the slurry on a surface of a copper thin film (thickness 10 µm) and drying the slurry.

### 3) Lamination process

Each of the separators of Embodiment and Comparative Example was interposed and stacked between the manufactured negative electrode and the manufactured positive electrode. An electrode assembly was obtained by performing a lamination process. The lamination process was performed under conditions of 70°C and 5.2 MPa by using a hot press for 10 seconds.

### <Experiment Example 1: permeability of separator>

The permeability (Gurley) of the separator in Embodiment and Comparative Example was measured by an ASTM D-2873 method. The Gurley value was measured by using Gurley type Densometer (No.158) by Toyoseiki according to the JIS Gurley measuring method. The permeability value was indicated as time (second), that is, the permeability that is taken for the air of 100 ml to pass through a cross section of the separator 1 in² under pressure of 12.2 in H₂O.

### <Experiment Example 2: heat shrinkage ratio of separator>

The heat shrinkage ratio of the separator in Embodiment and Comparative Example was measured by cutting the separator in a 50 mm X 50 mm size and placing the separators between pieces of A4 paper and inputting the separators to a convection oven of 150°C for 30 minutes.

In this case, the heat shrinkage ratio (%) was selected as [(the first area - an area after annealing at 150°C for 30 minutes)/(the first area)] X 100.

### <Experiment Example 3: tensile strength>

A specimen having a size of 100 mm x 15 mm was prepared as the separator in Embodiment and Comparative Example.

Strength at timing at which the specimen was broken when the specimen was pulled at a speed of 50 mm/min by using Universal Testing Systems (Instron^{®} 3345) at 25°C after the specimen was exposed at 180°C for 1 minute according to ASTM D882 was defined as tensile strength.

### <Experiment Example 4: density of separator>

The density of the separator in Embodiment and Comparative Example was calculated by cutting the separator in a 50 mm X 50 mm size and measuring the volume and mass of the separator under 25°C and 1 atmospheric conditions.

### <Experiment Example 5: thickness change ratio>

An initial thickness of the porous polymer base in Embodiment and Comparative Example and the thickness of the porous polymer base after press under 5 MPa pressure at 70°C were measured by using a contact type measuring instrument. The measurement was performed at intervals of 5 mm in a distance of 30 cm in the TD direction of the porous base. Furthermore, the measurements were performed at different MD locations in the TD direction five times, and an arithmetic mean of the measurements was set as the thickness of the porous base. Meanwhile, the thickness change ratio (%) of each porous polymer base was calculated through [Formula 1] below. Thickness change ratio (%) =[(initial thickness - thickness after press)/ initial thickness] X 100

### <Experiment Example 6: resistance of separator>

A coin cell was manufactured by using the separator in Embodiment and Comparative Example. After the coin cell was left along at room temperature for 1 day, resistance of the separator was measured by an impedance measuring method. The coin cell was manufactured as follows.

Negative electrode slurry was manufactured by mixing synthetic graphite as a negative electrode active material, denka black (carbon black) as a conductive material, and polyvinylidene fluoride (PVdF) as a binder at a weight ratio of 75:5:20, respectively, and adding N-methylpyrrolidone (NMP) that is a solvent.

A negative electrode was prepared by coating the negative electrode slurry on a copper current collector with the amount of loading of 3.8 mAh/cm² and drying the negative electrode slurry.

Positive electrode active material slurry was prepared by adding LiCoO₂ as a positive electrode active material, denka black as a conductive material, and polyvinylidene fluoride (PVdF) as a binder to N-methylpyrrolidone (NMP), that is, a solvent, at a weight ratio of 85:5:10. A positive electrode active material layer was formed so that the final amount of loading of the positive electrode become 3.3 mAh/cm² by coating the positive electrode active material slurry on an aluminum current collector having a sheet shape and drying the positive electrode active material slurry.

**A** coin cell was manufactured by interposing the separator of Embodiment and each of Comparative Examples between the negative electrode and the positive electrode that were manufactured as described above and injecting a nonaqueous electrolyte (1 M LiPF₆, ethylene carbonate (EC)/propylene carbonate (PC) /diethyl carbonate (DEC) (a volume ratio= 3:3:4)).

**[Table 1]**

| | Air permeabi lity (sec/100 ml) of separato r | Heat shrinkag e ratio (%) | Tensile strengt h (kgf/cm² ) | density (g/m³) of separat or | Thicknes s change ratio (%) | Resistan ce (ohm) |
|---|---|---|---|---|---|---|
| Embodiment 1 | 55 | 1 | 882 | 12.1 | 2.1 | 1.21 |
| Comparative Example 1 | 76 | 1 | 864 | 28.2 | 2.8 | 2.28 |
| Comparative Example 2 | 84 | 1 | 831 | 18.4 | 2.6 | 2.32 |
| Comparative Example3 | 63 | 1 | 774 | 19.1 | 3.2 | 1.87 |
| Comparative Example 4 | 366 | 5 | 1185 | 7.1 | 53.7 | 1. 64 |

Referring to Table 1, it was checked that in Embodiment 1, that is, an embodiment of the present disclosure, resistance and density of the separator were implemented to be low and tensile strength thereof was implemented to a level similar to those of Comparative Examples because the separator included the cellulose nanocrystals in the pore within the porous polymer base.

**In** contrast, it was checked that in Comparative Examples 1 to 3, the density of each of the separators was suddenly increased and resistance thereof was increased because the separators included aluminum oxide, aluminum hydroxide, and silicon dioxide, respectively. It was checked that in Comparative Example 4, the heat shrinkage ratio and the thickness change ratio were increased because cellulose nanocrystals were included in a separate coating layer, and thus heat resistance was degraded.

According to an embodiment of the present disclosure, mechanical properties of the separator can be improved and ion conductivity of the separator can be improved because the cellulose nanocrystals are included in the pore of the porous polymer base, that is, non-woven fabric.

### [Description of reference numerals]

100: separator for electrochemical device
110: porous polymer base
111: pore
113: cellulose nanocrystal
130: coating layer
131: polymer binder
133: inorganic particle

## Claims

1. A separator for an electrochemical device, comprising a porous polymer base comprising cellulose nanocrystals.

2. The separator of claim 1, wherein the cellulose nanocrystals are included in pores of the porous polymer base.

3. The separator of claim 1, wherein a density of the cellulose nanocrystals is 0.1 g/m³ or more to 2.0 g/m³ or less.

4. The separator of claim 1, wherein a Young's modulus of the cellulose nanocrystals is 50 GPa or more to 80 GPa or less.

5. The separator of claim 1, wherein a diameter of the cellulose nanocrystals is 30 nm or less.

6. The separator of claim 1, wherein a length of the cellulose nanocrystals is 600 nm or less.

7. The separator of claim 1, wherein an aspect ratio of the cellulose nanocrystals is 50 or more to 300 or less.

8. The separator of claim 1, wherein the porous polymer base is non-woven fabric.

9. The separator of claim 1, wherein a diameter of the pore of the porous polymer base is 1 µm or more to 20 µm or less.

10. The separator of claim 1, wherein a porosity of the porous polymer base is 30 vol% or more to 80 vol% or less.

11. An electrochemical device comprising:
a positive electrode;
a negative electrode; and
a separator interposed between the positive electrode and the negative electrode and according to any one of Claims 1 to 10.
